# EUROPÄISCHE PATENTANMELDUNG

(11) **EP 1 561 627 A2**
(43) Veröffentlichungstag der Anmeldung: **10.08.2005**
(21) Anmeldenummer: 04029014.0
(22) Anmeldetag: 08.12.2004
(51) Int. Cl.: B60K 15/063

(54) **Kraftstoffbehälter-Anordnung in Kraftfahrzeugen**

(30) Priorität: 07.01.2004 DE 202004000096 U
(71) Anmelder: EXPERT Maschinenbau GmbH, 64653 Lorsch (DE)
(72) Erfinder: Brückmann, Ralf, Dipl.Ing. (FH) Maschinenbau, 64625 Bensheim (DE)
(74) Vertreter: Helber, Friedrich G., Dipl.-Ing.

(57) **Zusammenfassung**

Anordnung zur Aufname von unter Überdruck stehenden Kraftstoffbehältern in Kraftfahrzeugen.

Der bzw. die Kraftstoffbehälter ist bzw. sind als jeweils im Bereich zwischen einer der Radaufhängung der Vorder- und/oder Hinterachse des Kraftfahrzeugs angeordneter Druckbehälter (12) und gleichzeitig als kraftaufnehmender und -übertragender Teil des Chassis bzw. Rahmens des Kraftfahrzeugs ausgebildet.

Die chassis- bzw. rahmenfesten Halterungen (22a;22b;22c;22d;22e) für die die federnde Aufhängung und Führung der Räder des Kraftfahrzeugs führenden bzw. abstützenden Bauelemente (20a;20b;20c;20d;20e) der Radaufhängung sind auf der Außenseite des Druckbehälters (12) vorgesehen.

## Beschreibung

Die Erfindung betrifft eine Anordnung von zur Aufnahme von unter Überdruck stehenden Kraftstoffbehältern in Kraftfahrzeugen.

An die Anordnung und Ausgestaltung von Kraftstoffbehältern in Kraftfahrzeugen, insbesondere in Personenkraftwagen werden eine Reihe von Anforderungen gestellt, die sich zum Teil widersprechen. So sollen diese Behälter einerseits eine hohe Aufnahmekapazität haben, um die Häufigkeit der Nachtankvorgänge möglichst gering zu halten und dabei andererseits so ausgestaltet und angeordnet sein, dass weder das Raumangebot im Fahrgastraum noch im Gepäckraum wesentlich beschränkt ist. Dabei sollen die Kraftstoffbehälter in einem in Bezug auf die Gefährdung von auslaufendem Kraftstoff bei Unfällen möglichst günstigen Bereich des Chassis bzw. Rahmens des Kraftfahrzeugs angeordnet sein. Bei modernen Pkw's wird deshalb versucht, den Kraftstofftank im Bereich der Fahrzeugachsen anzuordnen, wobei zur Optimierung der Schwerpunktlage des Fahrzeugs eine möglichst tiefe und niedrige Form des Kraftstoffbehälters angestrebt wird. Diese Anordnung wird aber - insbesondere bei den neueren Personenkraftwagen mit modernen Radführungssystemen, wie Raumlenkerachsen etc. erschwert, weil die Räder bei solchen Radführungssystemen jeweils mit mehreren räumlich zueinander versetzten Lenkern verschwenkbar am Chassis, und zwar zumeist an einem auf dem Chassis aufgesetzten Hilfsrahmen angelenkt werden müssen. Dieser Hilfsrahmen und die Kinematik der Lenker beschränken den für den Kraftstoffbehälter im Achsbereich zur Verfügung stehenden Raum beträchtlich, zumal zusätzliche Raumanforderungen durch die Anordnung der Federn und Stoßdämpfern und - sofern es sich um eine Achse für angetriebene Räder handelt - der Achsantrieb mit Differenzial etc. weitere räumliche Beschränkung bedingen. Bei modernen Kraftfahrzeugen werden die Kraftstoffbehälter deshalb heute oft aus Kunststoff im Blasverfahren hergestellt, wodurch es möglich ist, die Behälterform den gegebenen Raumverhältnissen bestmöglich anzupassen und so einen Kompromiss zwischen Fassungsvermögen und räumlichen Einschränkungen zu erzielen. Da die heute verwendeten Kraftstoffe bei atmosphärischem Druck flüssige Kohlenwasserstofferzeugnisse sind, sind die Anforderungen an die Druckfestigkeit der Kraftstoffbehälter vergleichsweise gering, was die geschilderte Möglichkeit der Herstellung von an die Raumerfordernisse angepasste Tankfonnen aus Kunststoff zulässt. Erheblich schwieriger stellt sich die Ausgestaltung und Anordnung von Kraftstoffbehältern für solche Kraftstoffe dar, die zum Verdampfen oder Vergasen neigen und deshalb unter erhöhtem Druck, d.h. in als Druckbehälter ausgebildeten Kraftstofftank mitgeführt werden müssen. Neben den in neuerer Zeit bereits in erheblichem Umfang als Kraftstoff eingesetzten, bei atmosphärischem Druck gasförmigen Brennstoffen, wie Erdgas, Propan, Butan etc. ist hier insbesondere an die Ausgestaltung von Druckbehältem für Wasserstoff zu denken, welcher als in der Zukunft immer wichtiger werdenden Brennstoff auch für Kraftfahrzeuge angesehen wird. Um sicherzustellen, dass ein mit Wasserstoff betriebenes Kraftfahrzeug eine hinreichende Laufleistung ohne zu häufiges Nachtanken erreicht, muss der Wasserstoff im Kraftstoffbehälter unter hohem Druck eingefüllt und gespeichert werden. Das bedingt, dass die Kraftstoffbehälter als dickwandige Druckbehälter in einer Form hergestellt werden, welche unter Berücksichtigung der hohen Druckbelastung eine entsprechende Festigkeit aufweist. Solche als Druckbehälter ausgebildete Kraftstofftanks haben daher meist die Form von im Querschnitt kreisförmig oder oval begrenzten langgestreckten Behältern, wie sie aus den Behältern zur Aufnahme von Gasen in der Form von "Druckflaschen" bekannt sind. Es ist nun aber ersichtlich, dass solche Behälterformen sich nur schwer in Kraftfahrzeuge mit den geschilderten räumlichen Beschränkungen gerade im Achsbereich einbauen lassen. In heutigen Versuchsfahrzeugen für Wasserstoffbetrieb wird deshalb häufig anstelle eines Kraftstoffbehälters eine Vielzahl von kleinvolumigen Hochdruckbehältern zur Aufnahme des Wasserstoffs verwendet, was aber nicht nur einen erhöhten Bau- und Gewichtsaufwand und somit eine Verringerung des Transportraums und des zulässigen Transportgewichts des Kraftwagens bedeutet, sondern - durch das Erfordernis der Verbindung der Kraftstoffbehälter der Druckleitungen - auch die potentielle Gefahr des Undichtwerdens der Verbindungsleitung und von Brüchen und somit die speziell bei Wasserstoff gegebene Explosionsgefahr erhöht.

Der Erfindung liegt demgegenüber die Aufgabe zugrunde, eine Anordnung für die Aufnahme von unter Überdruck stehenden Kraftstoffbehältern in Kraftfahrzeugen anzugeben, welche bei hinreichender Aufnahmekapazität eine möglichst raumökonomische Anordnung in dem aus Sicherheitsgründen anzustrebenden Achsbereich ermöglicht, wobei die geschilderten Gefährdungen minimiert sind.

Diese Aufgabe wird erfindungsgemäß dadurch gelöst, dass der bzw. die Kraftstoffbehälter als jeweils im Bereich zwischen einer der Radaufhängung der Vorder- und/oder Hinterachse des Kraftfahrzeugs angeordneter Druckbehälter und gleichzeitig als kraftaufnehmender und übertragender Teil des Chassis bzw. Rahmens des Kraftfahrzeugs ausgebildet und die chassis- bzw. rahmenfesten Halterungen für die die federnde Aufhängung und Führung der die Räder des Kraftfahrzeugs führenden bzw. abstützenden Bauelemente der Radaufhängung auf der Außenseite des Druckbehälters vorgesehen sind. Die zusätzliche Anbringung von Halterungspunkten auf der Außenseite für die schwenkbare Anlenkung von Radführungsorganen auf der Außenseite des Kraftstoffbehälters ermöglicht es, dass auf Rahmen oder Chassisausleger für die Radführungsorgane verzichtet werden kann, so dass der Kraftstofftank nunmehr in Doppelfunktion, nämlich als Behälter für Kraftstoff einerseits und als tragender Teil des Chassis oder Rahmen des Kraftfahrzeugs andererseits eingesetzt wird.

Der bzw. die Druckbehälter kann bzw. können dabei als integrale(r) Teil(e) des Chassis oder des Rahmens des Kraftfahrzeugs ausgebildet sein.

Alternativ kann der bzw. die Behälter auch als gesonderte(r) auf dem Chassis bzw. Rahmen des Kraftfahrzeugs montierbarer Hilfsrahmen ausgebildet sein.

In vorteilhafter Ausgestaltung der Erfindung ist bzw. sind der bzw. die Druckbehälter als dickwandige(r) langgestreckte(r) Drucktank(s) mit zylindrischem oder ovalem Querschnitt ausgebildet.

Die Anordnung des bzw. der Drucktanks erfolgt mit Vorteil mit rechtwinklig zur senkrechten Längsmittelebene des Chassis bzw. Rahmens des Kraftfahrzeugs verlaufenden Längsmittelachse.

Alternativ ist auch eine Ausgestaltung möglich, bei welcher der bzw. die Drucktank(s) mit parallel zur senkrechten Längsmittelebene des Chassis bzw. Rahmens des Kraftfahrzeugs im Wesentlichen horizontal verlaufender Längsmittel-achse angeordnet sind. Bei dieser Anordnung in Kraftfahrzeuglängsrichtung ist eine vergleichsweise größere Länge des bzw. der Drucktank(s) verwirklichbar wobei diese dann gleichzeitig die Funktion als Rahmen-Längsträger übernehmen können.

In erfindungsgemäßer Weiterbildung kann der Druckbehälter auch in einem ihn zumindest teilweise komplementär aufnehmenden Hüllbauteil eingesetzt sein, an welchem die Halterungen für die die Räder des Kraftfahrzeugs führenden bzw. abstützenden Bauelemente der Radaufhängung vorgesehen sind. Der zusätzliche konstruktive Aufwand und das Gewicht des Hüllbauteils werden dann durch die Möglichkeit der einfach und schnell montier- und demontierbaren Anordnung des Druckbehälters im Hüllbauteil aufgewogen. Außerdem ist dann auch ausgeschlossen, dass durch die beim Anschweißen der Halterungen für die Aufhängung und Führung der Räder entstehenden Schweißtemperaturen die Struktur des Druckbehälters selbst verändert und so dessen Druckfestigkeit negativ beeinflussen werden kann.

Die Erfindung ist in der folgenden Beschreibung eines Ausführungsbeispiels in Verbindung mit der Zeichnung näher erläutert, und zwar zeigt:
- Fig. 1: eine schematische isometrische Ansicht eines in der erfindungsgemäßen Weise ausgestalteten Ausführungsbeispiels der Anordnung eines unter Überdruck stehenden Kraftstoffbehälters eines Kraftfahrzeugs im Bereich von dessen nicht angetriebener Hinterachse;

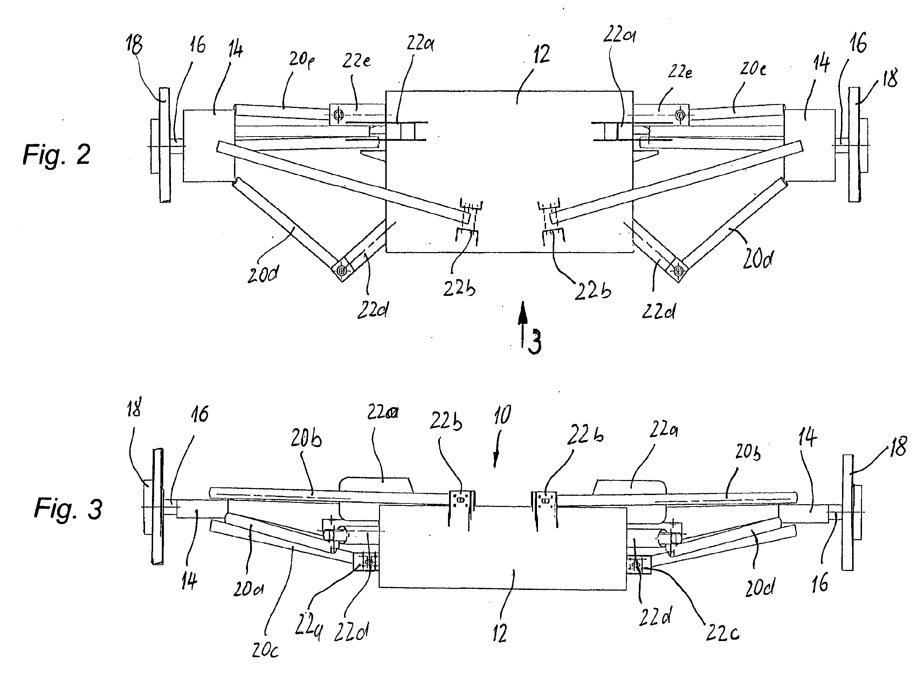

- Fig. 2: eine Draufsicht, gesehen in Richtung des Pfeils 2 in Fig. 1; und
- Fig. 3: eine Vorderansicht, gesehen in Richtung des Pfeils 3 in Fig. 2.

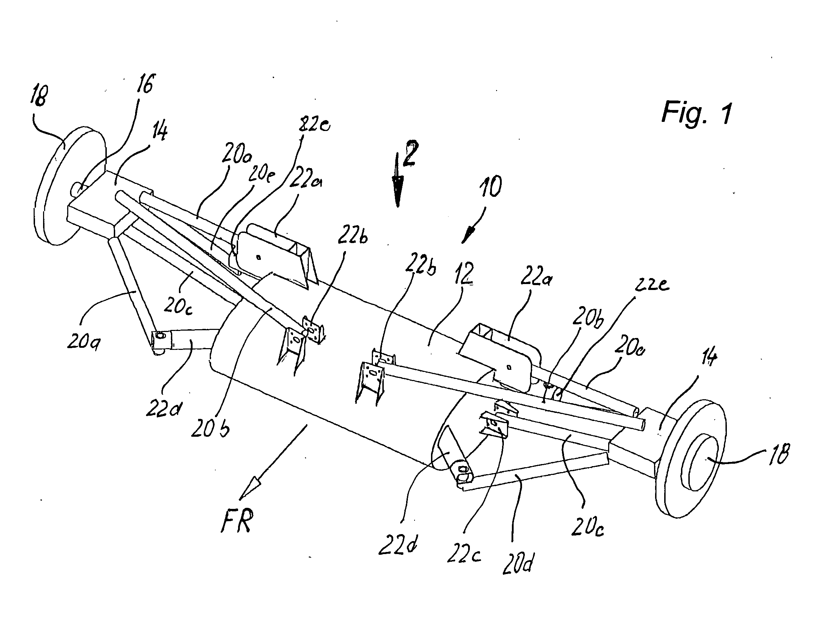

Von dem in seiner Gesamtheit mit 10 bezeichneten Ausführungsbeispiel einer erfindiulgsgemäßen Kraftstoffbehälter-Anordnung ist in der Zeichnungsfigur nur ein als langgestreckter dickwandiger Druckbehälter mit ovalem Querschnitt ausgebildete Kraftstoffbehälter gezeigt, welche quer zu der durch den in Fig. 1 mit FR bezeichneten Pfeil angegebenen Vorwärts-Fahrtrichtung eines - im Übrigen nicht gezeigten - zugehörigen Kraftfahrzeugs angeordnet ist. Die zur Betankung des Druckbehälters 12 mit einem unter Druck stehenden Gas, z.B. Wasserstoff, erforderlichen Armaturen sowie die Anschlüsse für die zum Motor führenden Druckleitung sind in den Zeichnungsfiguren aus Gründen der Übersichtlichkeit nicht dargestellt.

Der Druckbehälter 12 dient hier gleichzeitig als Träger für auf der Außenseite seiner Wandung angebrachte - vorzugsweise angeschweißte - Bauelemente, die zur verschwenkbaren Lagerung von zwei bezüglich der senkrechten Längsmittelebene eines zugehörigen Kraftfahrzeugs symmetrisch angeordneten Gruppen von Lenkern dienen, die ihrerseits jeweils mit einem äußeren Träger 14 verbunden sind, welche jeweils einen Lagerzapfen 16 für eines der - nicht gezeigten - Hinterräder des Kraftfahrzeugs tragen. Die drehbar auf den Lagerzapfen 16 gelagerten Radnaben 18 mit Bremsscheiben etc. sind wiederum nur schematisch dargestellt.

Jede Gruppe von Lenkern umfasst beim dargestellten Ausführungsbeispiel jeweils fünf Lenker 20a, 20b, 20c, 20d und 20e deren innere Enden jeweils räumlich versetzt in den erwähnten als Lagerböcke 22a, 22b, 22c, 22d und 22e ausgebildeten Bauelementen gelagert sind. Insgesamt bilden die Gruppen von Lenkern eine so genannte Raumlenker- bzw. Integral-Hinterachse, bei welcher die räumlich angeordneten Lenker beim Einfedem nur geringe und genau definierte kinematische Lenkeffekte zulassen. Die zweckmäßig über stoßelastische Zwischenglieder erfolgenden Anlenkung der inneren Enden der Lenker 20a, 20b, 20c, 20d und 20e können in ihrer Elastizität so abgestimmt sein, dass das Rad unter der Wirkung von Längskräften im Interesse eines guten geraden Auslaufs des Kraftfahrzeugs keine Vorspuränderungen ausführt. Auch die äußeren Enden der Lenker sind zweckmäßig unter Zwischenschaltung von elastischen, stoßdämpfenden Elementen jeweils an den Trägem 14 angeschlossen.

Der Druckbehälter 12 hat also die Doppelfunktion des Kraftstoffbehälters und eines Hilfsrahmens für die Hinterachs-Führung. Der Druckbehälter 12 seinerseits kann fest in das Chassis des Kraftfahrzeugs einbezogen sein, indem er mit der Bodengruppe des Kraftfahrzeugs verschweißt wird und dann zur Querversteifung der Bodengruppe beiträgt. Alternativ kann er auch auf dem gesonderten Kraftfahrzeug-Chassis lösbar befestigt sein, wobei über schwingungs- und stoßfdämpfende elastische Zwischenlager in die Achse eingeleitete Stöße und Schwingungen vom Chassis abgekoppelt werden können.

Es ist ersichtlich, dass im Rahmen des Erfindungsgedankens Abwandlungen und Weiterbildungen des beschriebenen Ausführungsbeispiels verwirklichbar sind. So kann der Druckbehälter 12 des vorstehend beschriebenen Ausführungsbeispiels auch in zwei direkt oder über das Chassis indirekt miteinander verbundene Druckbehälter unterteilt sein, an welchen jeweils ein Teil der Lagerböcke für die Lenker vorgesehen sind. Anstelle der beschriebenen Anordnung des bzw. der Druckbehälter in Querrichtung kann der bzw. die Druckbehälter auch in Längsrichtung im Chassis angeordnet sein, wobei der bzw. die Druckbehälter dann - bei entsprechender Verlängerung - auch Teil(e) des Chassis selbst im Sinne eines bzw. von Längsträger(n) bilden kann bzw. können.

## Patentansprüche

1. Anordnung von zur Aufnahme von unter Überdruck stehenden Kraftstoffbehältern in Kraftfahrzeugen,
**dadurch gekennzeichnet,**
**dass** der bzw. die Kraftstoffbehälter als jeweils im Bereich zwischen einer der Radaufhängung der Vorder- und/oder Hinterachse des Kraftfahrzeugs angeordneter Druckbehälter (12) und gleichzeitig als kraftaufnehmender und -übertragender Teil des Chassis bzw. Rahmens des Kraftfahrzeugs ausgebildet ist bzw. sind, und
**dass** die chassis- bzw. rahmenfesten Halterungen (22a; 22b; 22c; 22d; 22e) für die die federnde Aufhängung und Führung der die Räder des Kraftfahrzeugs führenden bzw. abstützenden Bauelemente (Lenker 20a; 20b; 20c; 20d; 20e) der Radaufhängung auf der Außenseite des Druckbehälters (12) vorgesehen sind.

2. Anordnung nach Anspruch 1, **dadurch gekennzeichnet, dass** der bzw. die Druckbehälter (12) integrale(r) Teil(e) des Chassis oder des Rahmens des Kraftfahrzeugs ist bzw. sind.

3. Anordnung nach Anspruch 1, **dadurch gekennzeichnet, dass** der bzw. die Druckbehälter (12) als gesonderte(r) auf dem Chassis bzw. Rahmen des Kraftfahrzeugs montierbarer Hilfsrahmen ausgebildet ist.

4. Anordnung nach einem der Ansprüche 1 bis 3, **dadurch gekennzeichnet, dass** der bzw. die Druckbehälter (12) als dickwandige(r) langgestreckte(r) Druclctank(s) mit zylindrischem oder ovalem Querschnitt ausgebildet ist bzw. sind.

5. Anordnung nach Anspruch 4, **dadurch gekennzeichnet, dass** der bzw. die Drucktank(s) (12) mit rechtwinklig zur senkrechten Längsmittelebene des Chassis bzw. Rahmens des Kraftfahrzeugs verlaufende Längsmittelachse angeordnet ist bzw. sind.

6. Anordnung nach Anspruch 4, **dadurch gekennzeichnet, dass** der bzw. die Drucktank(s) (12) mit parallel zur senkrechten Längsmittelebene des Chassis bzw. Rahmens des Kraftfahrzeugs im Wesentlichen horizontal verlaufende Längsmittelachse angeordnet ist bzw. sind.

7. Anordnung nach einem der Ansprüche 1 bis 6, **dadurch gekennzeichnet, dass** der Druckbehälter (12) in einem ihn zumindest teilweise komplementär aufnehmenden Hüllbauteil eingesetzt ist, an welchem die Halterungen (22a; 22b; 22c; 22d; 22e) für die die Räder des Kraftfahrzeugs führenden bzw. abstützenden Bauelemente (Lenker 20a; 20b; 20c; 20d; 20e) der Radaufhängung vorgesehen sind.

8. Anordnung nach Anspruch 7, **dadurch gekennzeichnet, dass** der Druckbehälter (12) demontierbar im Hüllbauteil angeordnet ist.
